# EUROPEAN PATENT SPECIFICATION

(11) **EP 1 524 141 B1**
(45) Date of publication and mention of the grant of the patent: **02.07.2008**
(21) Application number: 03023360.5
(22) Date of filing: 16.10.2003
(51) Int. Cl.: B60J 5/04, B62D 25/04

(54) **Safety arrangement for a vehicle body structure**
Sicherheitsanordnung für eine Fahrzeugstruktur
Arrangement de sécurité pour une structure de carrosserie automobile

(43) Date of publication of application: 20.04.2005
(73) Proprietor: Ford Global Technologies, LLC, Dearborn, MI 48126 (US)
(72) Inventor: Borged, Svante, 44950 Alafors (SE); Crona, Ragnar, 43638 Askim (SE); Meeusen, Jean-Pierre, 41763 Göteborg (SE); Öhlund, Anders, 437 35 Lindome (SE)
(74) Representative: Spitmann, Knut Hermann

(56) References cited:
- EP-A- 0 779 171
- DE-A- 4 240 416
- US-A- 5 518 290

## Description

The present invention relates to a force distributing arrangement arranged to distribute longitudinal collision forces in a vehicle at an accident. The vehicle comprises a first body structure member comprising a A-pillar or a B-pillar having a rear surface, a second body structure member comprising a door having a door hinge end panel which adjoins said first body structure member in a closed position of said door and an interspace between. The door comprises at least one reinforced interior beam. The arrangement is arranged to be provided in said interspace.

### TECHNICAL BACKGROUND

In conventional vehicles, there is a general requirement that vehicle body structures shall fulfil certain requirements of strength and deformation. In this way a high degree of safety can be provided for the occupants in a vehicle during collisions and other situations involving very high loads due to impact forces acting on the vehicle.
In order to provide a high degree of safety for the occupants in a vehicle, the body structure of the vehicle must be designed and manufactured in a way which provides a high strength and resistance to impact forces, suitably by means of absorbing and distributing the impact forces in an efficient way. This is normally achieved by means of various reinforcement structures and components in the vehicle.

In the pending European patent application no. 02445172.6 an improved vehicle door assembly is provided in which the impact forces acting on the vehicle in the event of a collision can be absorbed and distributed in an efficient manner as to provide a high degree of safety for the occupants. In this case the impact forces will act on the upper A pillar, the interior front door upper beam and the interior front door lower beam. Moreover, the impact forces acting on the front door upper beam is then transmitted to the interior rear upper beam inside the rear door in an efficient manner.
In so-called offset accidents it has been particularly apparent that it is desired to control and improve the distribution of the impact forces and the energy absorbing capacity in an even higher extent. In an offset accident two vehicles do not crash head onto each other, instead the sides of the fronts meet, e.g. at an overtaking, whereby one side of the respective vehicle receives a greater amount of the impact forces than the other side.

Generally, it is desired to prevent any possible displacements and rotations of the doors in any direction at accidents for maintaining the force distributing and absorbing capacity of the body structure. The described displacements and rotations are particularly apparent in the described offset accidents due to the great amount of impact forces on one side of the vehicle. Furthermore, the displacements and rotations are consequences of the geometrical requirements of the vehicle doors, and that the hinges and the door locks of the vehicles are not strong enough.

Another problem is if the upper A pillar receives a too great amount of the impact forces since it then can be deformed.

In EP 0 818 339 an intermediate energy absorbing element is shown. However, the energy absorbing element is provided between the outer panel of a vehicle door and the inner frame of the vehicle door.

In EP 0779171A1 a vehicle door impact absorption apparatus is shown by which side impacts can be restricted during side impact intrusions to thereby provide increased protection for the vehicle occupants.

In EP 1 216 867 a vehicle door comprising an internal reinforcing member is shown. One end of the reinforcing member is provided with a trust strip in line with the adjacent door pillar. The trust strip has a stud fixed to it which in the event of a front end impact is forced against the door pillar and makes an imprint engaging the door with the door pillar so that the reinforcing member takes up some of the resulting lengthwise deformation. A risk with this system is that the area of imprint is too great and continuous, whereby the desired force distributing and absorbing capacity of the door is not obtained. Thereby the impact forces are received by another body structure member, which can then be deformed. Furthermore, the arrangement in EP 1 216 867 cannot provide a desired safe prevention of displacements and rotations of the door at accidents.

### SUMMARY OF THE INVENTION

It is therefore an object of the present invention to provide an arrangement for improving the impact force distributing and the absorbing capacity of a body structure of a vehicle at an accident by means of improving the impact force receiving capacity of a particular body structure member. Particularly, it is an object to improve the force receiving capacity of an interior beam in a door structure.

It is also an object of the present invention to provide a quicker course of an accident, i.e. so at least one of the force distributing and absorbing elements of the actual body structure receives the impact forces earlier in the course of the accident. Particularly, it is an object of this invention that the front door, comprising an interior front door upper beam, receives the impact forces earlier in the course of the accident.

It is a further object to prevent the doors of a vehicle to be displaced and/or rotated in any direction in the course of the accident for maintaining the force distributing and absorbing capacity of the interior reinforced beams of the doors. At the same time, the doors shall be openable for passengers after the accidents have ended.

These objects are achieved in accordance with the present invention by means of an arrangement for improving the force distributing and absorbing capacity of a vehicle in an accident as claimed in claim 1, wherein the arrangement is provided with at least two protruding portions for locally reducing the interspace, the protruding portions having an extension, or protrude, substantially in or against the longitudinal extension length of the vehicle and being provided in the proximity of said interior beam for engaging said first and second body structure members as the available interspace decreases at an accident and in that state distributing forces from the first body structure member to said interior beam of the second body structure member.
By means of said protruding portions, the impact forces are more quickly distributed from the first body structure member to the second body structure member and between their interior reinforced beams, i.e. a quicker course of the accident is provided since the interspace between said body structure members is locally reduced, in particular reduced in the proximity of at least one reinforced beam. By means of the inventive arrangement, the second body structure member receives a greater part of the total amount of impact forces at the accident.
However, the required interspace between the body structure members is maintained. At some locations, other than at the location of the protruding portions, interspaces are required for the opening and closing procedure of the door and other geometrical requirements as well.

In a first preferred embodiment, the arrangement is provided with at least two protruding portions for providing the required stability and strength of the arrangement, and thereby However, the required interspace between the body structure members is maintained. At some locations, other than at the location of the protruding portions, interspaces are required for the opening and closing procedure of the door and other geometrical requirements as well.

In a first preferred embodiment, the arrangement is provided with at least two protruding portions for providing the required stability and strength of the arrangement, and thereby a good force receiving capacity of the arrangement. Furthermore, with the at least two protruding portions, the engagement between the body structure members and their interior reinforced beams are improved. In greater detail, the protruding portions are preferably acute for improving the engagement between the body structure members at an accident. A type of hook or clutching effect is obtained by means of the acute protruding members at the engagement between the body structure members at the deformation thereof. In greater detail, the protruding portions actually work as knifes into the second body structure member. By means of the inventive arrangement, a sufficiently high pressure is provided on local areas of the second body structure member at an accident for achieving the desired type of engagement.

By means of said engagement of the first and second body structure members, a body structure member such as a vehicle door is not displaced or rotated in the event of an accident. The term "in that state" refers to the engaged state between the first and the second body structure member. In this way, the body structure of the vehicle still distributes and absorbs the impact forces in the desired deformation direction from the first body structure member to the second body structure member.

The first and second body structure members are respectively constituted of any of: a door, a frame, a pillar, a hood, a front fender, a roof, and etcetera. In greater detail, a door is preferably a front door or a rear door, and a pillar is preferably an A pillar or a B pillar. More preferably, the first body structure member is a lower A pillar and the second body structure member is a front door hinge end panel. Hereinafter, the lower A pillar refers to the part of the A pillar located adjacent the front door just below the window. Particularly, the lower A pillar refers to the end or gable of the A pillar in that area.

Advantageously, the arrangement comprises an elongated flat structure. The thickness of the elongated flat structure is thin in relation to the extension length of the elongated flat structure. Particularly, it is the surfaces such as the front side and the rear side of the elongated flat structure being substantially flat.

Preferably, the arrangement is arranged to be mounted onto the first or second body structure member. Particularly, the arrangement is arranged to be mounted onto the front door hinge end panel where it adjoins the A pillar when the door is closed. The arrangement is preferably mounted with the flat rear side of the elongated flat structure against the front door hinge end panel. Alternatively, the arrangement is mounted with the flat rear side of the elongated flat structure against the lower A pillar. Advantageously, the protruding portions in the mounted position have an extension, or protrude, substantially in or against the deformation direction of the vehicle at an accident.

The protruding portions are each constituted of a part of an edge of the elongated flat structure, which is angled in relation to the elongated flat structure. Particularly, the edges are angled in relation to the substantially flat front surface or rear surface of the flat elongated structure. Preferably, the edges substantially protrude perpendicular to the flat front surface.

The elongated flat structure of the arrangement comprises a first section which is provided with at least two substantially half-cylinder shaped protruding portions. The half-cylinder shaped protruding portions protrude perpendicularly to the flat surfaces of the flat elongated structure and perpendicularly to the described edges as well. At the same time, the protruding portions protrude from the flat front surface in substantially the same direction, namely substantially against the deformation direction of the vehicle. By means of the at least two substantially half-cylinder shaped protruding portions a good stability, strength and load distributing capacity of the arrangement are provided.

The elongated flat structure of the arrangement comprises at least one second section which then is provided with at least one protruding portion. Preferably, the elongated flat structure comprises two second sections each provided with at least two protruding portions in form of the described edges.

In the first preferred embodiment, the arrangement preferably comprises one substantially rectangular first section having two substantially half-cylinder shaped protruding portions. The elongated flat structure preferably comprises two substantially rectangular second sections separated by the first section.
Alternatively, the arrangement comprises one first section being surrounded by four second sections, provided at each side of the rectangular first section.

In a second preferred embodiment, the first body structure member also comprises an interior reinforced interior beam for distributing forces from the interior reinforced beam of the first body structure member to the interior beam of the second body structure member as the available interspace decreases.
Particularly, the first body structure member in form of a lower A pillar then comprises an interior reinforced interior beam for distributing forces from the interior reinforced beam of the A pillar to the interior beam of the second body structure member in form of a door as the available interspace decreases at an accident.
Alternatively, the first reinforced beam distributes and transfers forces to two, three, four, or five, or as many reinforced beams as possible, provided inside the second body structure member such as the door.

### BRIEF DESCRIPTION OF THE DRAWINGS

The invention will be described in the following by way of example only and with reference to the embodiments illustrated in the drawings, in which
- Fig. 1: shows a principal sketch of a body structure provided with the inventive arrangement,
- Fig. 2: shows a principal sketch of a first embodiment of the invention provided onto the front door hinge end panel,
- Fig. 3: shows a top view of the first embodiment in Fig. 2,
- Fig. 4: shows a section of the first embodiment in Fig. 3, and
- Fig. 5: shows a side-view of the first embodiment in Fig. 3.

### DETAILED DESCRIPTION OF PREFERRED EMBODIMENTS

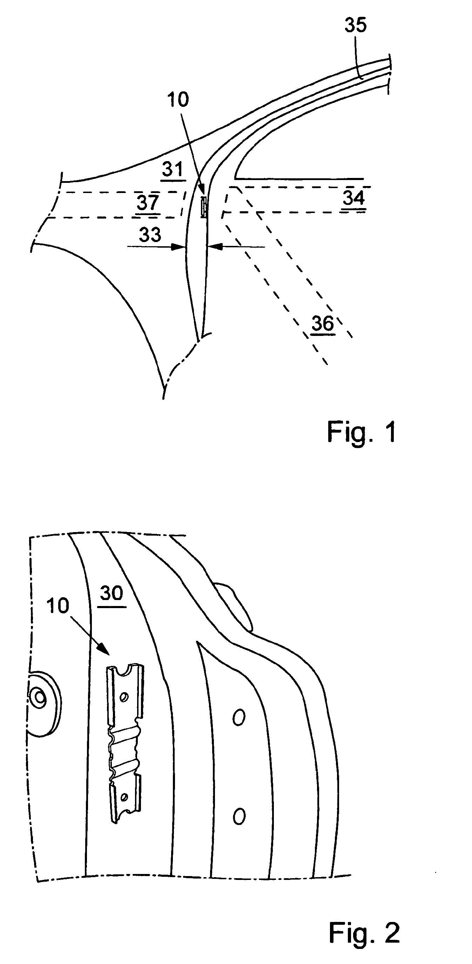

In the drawings, reference numeral 10 generally denotes an arrangement for improving the force distributing and absorbing capacity of a front door hinge end panel structure in a vehicle at an accident, see Fig. 2.

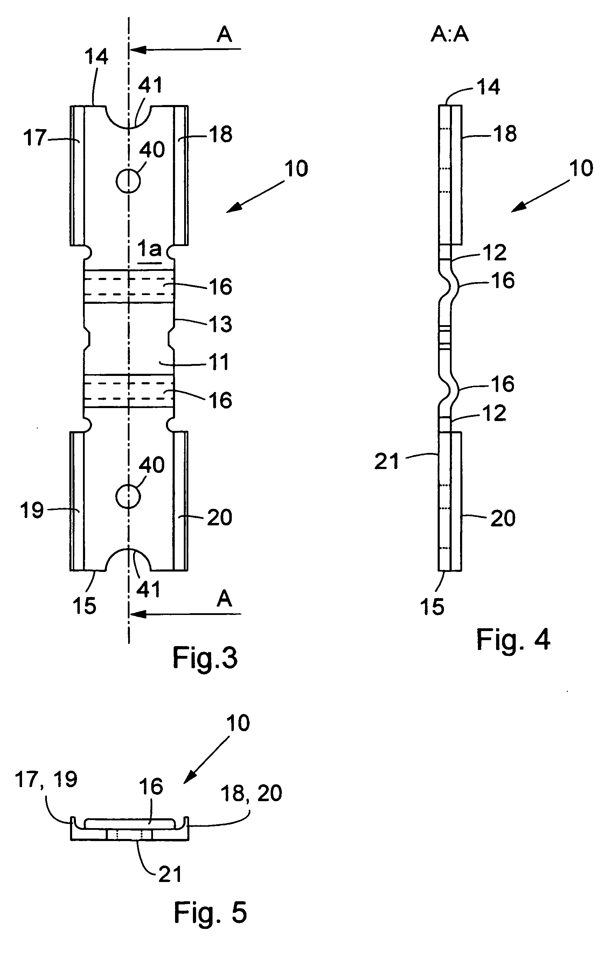

The arrangement 10 comprises an elongated flat structure 11, see Fig. 3. The thickness of the elongated flat structure 11 is thin in relation to its extension length. Particularly, the elongated flat structure 11 has a front surface 12 and a rear surface 21 being substantially flat. The elongated structure 11 is substantially rectangularly shaped, i.e. comprises two sides of a longer length and two sides of a shorter length. Preferably, the elongated flat structure 11 is constituted of a reinforced sheet of metal.

The elongated flat structure 11 of the arrangement 10 comprises one first section 13 and at least one second section 14 and 15. The first section 13 is constituted of an intermediate substantially rectangular section 13 of the elongated flat structure 11 with relation to its longitudinal extension length. In a preferred embodiment of the invention, the first section 13 is provided with two curved portions 16, which are substantially half-cylinder shaped protruding out of the flat front surface 12 in a direction perpendicular to the longitudinal extension length of the elongated flat structure 11, see Fig. 4. Preferably, the two half-cylinder shaped protruding portions 16 are manufactured by means of bending of the elongated flat structure 11.

At an accident, the half-cylinder shaped protruding portions 16 in a mounted position operate as a type of load distributors distributing the forces applied thereon to the entire arrangement 10, and the underlying front door hinge end panel structure 30 when mounted thereon, see fig. 2. However, the half-cylinder shaped protruding portions 16 are not necessary a part of alternative embodiments of the inventive arrangement 10.

As mentioned above, the elongated flat structure 11 of the arrangement 10 comprises at least one second section 14 and 15. In the preferred embodiment of the invention, the elongated flat structure 11 comprises two substantially rectangular second sections 14 and 15 as well, see Fig. 3. The first second section 14 is provided on one side of the first intermediate section 13, and the other second section 15 is provided on the opposite side of the first intermediate section 13, see Fig. 3. Thus, the two second sections 14 and 15 are separated by the first section 13.

In the preferred embodiment, the second sections 14 and 15 are each provided with two protruding portions 17, 18 or 19, 20, protruding out from the elongated flat structure 11 when seen in a section, see Fig. 4. In greater detail, each protruding portion 17, 18, 19 and 20 is constituted of an edge of the elongated flat structure 11, which is angled in relation to the flat front surface 12 of the elongated flat structure 11, see Fig. 5. Preferably, the edges 17, 18, 19 and 20 substantially protrude perpendicular to the flat front surface 12. The actual edges are the edges 17, 18, 19 and 20 of the sides of a longer length of the elongated flat structure 11, i.e. the edges 17, 18, 19 and 20 extending in the longitudinal extension direction of the elongated flat structure 11. Moreover, the edges 17, 18, 19 and 20 preferably protrude from the front surface 12 and in the same direction as the half-cylinder shaped protruding portions 16. The protruding portions 17, 18, 19 and 20 are manufactured by means of bending of the actual edges of the elongated flat structure 11.
In even more detail, the edges of the protruding portions 17, 18, 19 and 20 are preferably acute but not sharp for the engagement of the front door end hinge panel 30 and the lower A pillar 31, which is described in greater detail hereinafter. The protruding members are preferably acute for improving the engagement between the lower A pillar 31 and the front door end hinge panel 30 at the deformation of the lower A pillar at the accident. In more detail, a type of hook or clutching effect is obtained by means of the acute protruding portions 17, 18, 19 and 20 at the engagement between the lower A pillar 31 and the front door end hinge panel 30 at the deformation of the lower A pillar 31. Thus, the protruding portions 17, 18, 19 and 20 work as knifes. It is important that a sufficiently high surface pressure of the impact forces is required on local areas of the lower A pillar 31 for achieving the described type of engagement. If the sufficiently high surface pressure is not obtained, the protruding portions 17, 18, 19 and 20 only takes space of the interspace 33 and work as distances.

The arrangement 10 can further be provided with holes 40 and recesses 41, which are not necessary for the invention but only for facilitating mounting of the arrangement 10 onto the actual vehicle.

In the mounted position the arrangement 10 is arranged to be provided in an interspace 33 between the front door hinge end panel 30 and the lower A panel 31 of a vehicle, see Fig. 1. By the way, the interspace 33 is highly exaggerated (i.e. enlarged) in Fig. 1 for the sake of clarity. Further, the arrangement 10 is located in the proximity of an interior front upper beam 34 provided inside the front door, and particularly provided inside the front door hinge end panel 30. The substantially flat rear surface 21 of the elongated flat structure 11 is mounted onto the front door hinge end panel 30 approximately perpendicular against the deformation direction of the vehicle at an accident. Here it is assumed that the deformation direction is approximately the longitudinal extension length of the vehicle. Consequently, in the mounted position the protruding portions 17, 18, 19 and 20 obtain an extension against the deformation direction as well. The protruding portions 17, 18, 19 and 20 are then located so that they can transfer forces from the lower A pillar 31, ahead of the protruding portions 17, 18, 19 and 20, to the interior front upper beam 34 inside the front door hinge end panel 30.
Thus, by means of the inventive arrangement, it is possible to locally decrease the interspace 33 between the lower A pillar 31 and the front door hinge end panel 30 but also to maintain the general geometrical requirements there between.
In greater detail, the term "interspace" 33 refers to the "free space" between the body structure members such as between the front door end panel 30 and the lower A pillar 31 in the deformation direction. When the interspace 33 is locally decreased or reduced, it refers to that the "free space" or gap between the body structure members is decreased or reduced, not the width or distance between the actual body structure members. However, a consequence of a reduced width or distance between the actual body structure members is a reduced interspace. But according to the inventive arrangement the interspace can also be locally reduce by means of providing arrangements taking up space between the actual body structure members.

The inventive arrangement 10 operates according to the following. In a collision, such as a head on collision or an offset collision, the front part of the vehicle is hit and damaged, whereupon the hood and at least one of the front fenders are damaged as well. Thereby the damaged hood and the damaged front fender (s) are displaced backwards, substantially in the longitudinal direction of the vehicle, which is generally the deformation direction. Then the lower A pillar 31 is affected and displaced in a direction towards the front door hinge end panel 30.

The available interspace 33 between the lower A pillar 31 and the front door hinge end panel 30 decreases in the described way. It is then likely that the protruding portions 17, 18, 19 and 20 gradually abut onto the lower A pillar 31, and subsequently, the protruding portions 17, 18, 19 and 20 are deformed, and deform the lower A pillar 31 as well. Finally, the protruding portions 17, 18, 19 and 20 hook and clutch the lower A pillar panel 31 as the interspace 33 reduces even more. For clarifying, when the length of the protruding portions 17, 18, 19 and 20 is longer than the interspace 33, the protruding portions 17, 18, 19 and 20 hook and connect the lower A pillar 31 more and more as the available interspace 33 decreases. Since the arrangement 10 is fixedly provided onto the front door hinge end panel 30, the front door and the lower A pillar 31 are engaged by means of the protruding portions 17, 18, 19 and 20 protruding into the lower A pillar 31 after it has been deformed.

Furthermore, as the protruding portions 17, 18, 19 and 20 abut onto the lower A pillar 31, the A pillar is deformed and when the front door hinge end panel 30 and the lower A pillar 31 are engaged, the impact forces are transferred from the lower A pillar 31 to the upper A pillar 35, the interior front door upper beam 34 and the front door lower beam 36.

By means of the inventive arrangement, the interspace 33 between the lower A pillar 31 and the front door hinge end panel 30 is locally reduced, whereby the time of the course of the accident is reduced and the front door comprising the interior front upper beam 34 receives the impact forces previously in the course of the accident while maintaining the desired geometrical requirements. Consequently, the interior front upper beam 34 receives a greater amount of the total amount of impact forces. In this way, the arrangement 10 also prevents other structural members as the upper A pillar 35 and the front door lower beam 36 to receive a too great amount of impact forces. Moreover, by means of the inventive arrangement, the front door cannot be displaced or rotated outwards since it is safely engaged with the lower A pillar 31. However, it is obviously still possible for passengers to open the door after the accident. In this way, the force distributing and absorbing capacity of the body structure of the vehicle is improved.

In a second preferred embodiment, the lower A pillar 31 also comprises an interior reinforced interior beam 37. In operation the interior beam 37 of the described inventive arrangement distributes forces to the interior beam 34 of the front door end hinge panel 30 as the available interspace decreases at the accident. Obviously, the interior reinforced interior beam 37 of the lower A pillar 31 and the interior beam 34 of the front door end hinge panel 30 are then engaged by means of the inventive arrangement.

The invention has been described above and illustrated in the drawings by way of example only and the skilled person will recognize that various modifications may be made without departing from the scope of the invention as defined by the appended claims.

## Claims

1. A force distributing arrangement (10) arranged to distribute longitudinal collision forces in a vehicle at an accident, the vehicle comprising a first body structure member (31) comprising an A-pillar or a B pillar having a rear surface, a second body structure member (30) comprising a door having a door hinge end panel (30) which adjoins said first body structure member (31) in a closed position of said door and an interspace (33) between said rear surface of the first body structure member (31) and said door hinge panel (30), the door comprising at least one interior reinforced beam (34),
**characterised in that** the arrangement (10) being arranged to be provided in said interspace (33), **that** the arrangement (10) is provided with at least two protruding portions (17, 18, 19, 20) for locally reducing the interspace (33), the protruding portions (17, 18, 19, 20) having an extension, or protrude, substantially in or against the longitudinal extension length of the vehicle and being provided in the proximity of said interior beam (34) for engaging said first and second body structure members (30, 31) as the available interspace (33) decreases at an accident and **in that** state distributing forces from the first body structure member (31) to said interior beam (34) of the second body structure member (30).

2. An arrangement as claimed in claim 1,
**characterised in that** the arrangement (10) is arranged to be mounted onto the first or second body structure member (30, 31).

3. An arrangement as claimed in anyone of the preceding claims,
**characterised in that** the protruding portions (17, 18, 19, 20) in the mounted position have an extension in or against a deformation direction of the vehicle at an accident.

4. An arrangement as claimed in anyone of the preceding claims,
**characterised in that** the arrangement (10) comprises an elongated flat structure (11).

5. An arrangement as claimed in claim 4,
**characterised in that** the elongated flat structure (11) of the arrangement (10) comprises a first section (13) which is provided with at least two substantially half-cylinder shaped protruding portions (16).

6. An arrangement as claimed in claims 4 and 5,
**characterised in that** the elongated flat structure (11) of the arrangement (10) comprises at least one second section (14, 15) which is provided with at least one protruding portion (17, 18, 19, 20).

7. An arrangement as claimed in anyone of the preceding claims,
**characterised in that** the protruding portions (17, 18, 19, 20) are each constituted of a part of an edge of the elongated flat structure (11), which is angled in relation to the elongated flat structure (11).

8. An arrangement as claimed in claims 4 - 6,
**characterised in that** the elongated flat structure (11) of the arrangement (10) comprises the substantially rectangular first section (13) being provided with two substantially rectangular second sections (14, 15) on opposite sides of the substantially rectangular first section (13).

9. An arrangement as claimed in any of the preceding claims,
**characterised in that** the first body structure member (31) also comprises an interior reinforced interior beam (37) for distributing forces from the interior reinforced beam (37) of the first body structure member (31) to the interior beam (34) of the second body structure member (30) as the available interspace decreases.

## Patentansprüche

1. Kraftverteilungsanordnung (10), die zur Verteilung von in Längsrichtung verlaufenden Zusammenprallkräften in einem Fahrzeug bei einem Unfall angeordnet ist, wobei das Fahrzeug ein erstes Karosseriestrukturelement (31) mit einer A-Säule oder einer B-Säule mit einer Hinterfläche, ein zweites Karosseriestrukturelement (30) mit einer Tür mit einer Türscharnierendwand (30), die in einer geschlossenen Position der Tür an das erste Karosseriestrukturelement (31) angrenzt, und einen Zwischenraum (33) zwischen der Hinterfläche des ersten Karosseriestrukturelements (31) und der Türscharnierwand (30) umfasst, wobei die Tür mindestens einen inneren verstärkten Träger (34) aufweist, **dadurch gekennzeichnet, dass** die Anordnung (10) so angeordnet ist, dass sie in dem Zwischenraum (33) vorgesehen ist, dass die Anordnung (10) mit mindestens zwei vorragenden Abschnitten (17, 18, 19, 20) versehen ist, um den Zwischenraum (33) örtlich zu verringern, wobei die vorragenden Abschnitte (17, 18, 19, 20) im Wesentlichen in der oder gegen die Längserstreckungslänge des Fahrzeugs eine Verlängerung haben oder vorragen und in der Nähe des inneren Trägers (34) vorgesehen sind, um das erste und das zweite Karosseriestrukturelement (30, 31) in Eingriff zu nehmen, wenn der zur Verfügung stehende Zwischenraum (33) bei einem Unfall abnimmt, und in diesem Zustand Kräfte vom ersten Karosseriestrukturelement (31) zum inneren Träger (34) des zweiten Karosseriestrukturelements (30) zu verteilen.

2. Anordnung nach Anspruch 1, **dadurch gekennzeichnet, dass** die Anordnung (10) so angeordnet ist, dass sie an das erste oder das zweite Karosseriestrukturelement (30, 31) montiert werden kann.

3. Anordnung nach einem der vorhergehenden Ansprüche,
**dadurch gekennzeichnet, dass** die vorragenden Abschnitte (17, 18, 19, 20) in der montierten Position eine Verlängerung in der oder gegen die Deformationsrichtung des Fahrzeugs bei einem Unfall haben.

4. Anordnung nach einem der vorhergehenden Ansprüche,
**dadurch gekennzeichnet, dass** die Anordnung (10) eine längliche flache Struktur (11) umfasst.

5. Anordnung nach Anspruch 4, **dadurch gekennzeichnet,**
**dass** die längliche flache Struktur (11) der Anordnung (10) eine erste Sektion (13) umfasst, die mit mindestens zwei im Wesentlichen halbzylindrisch geformten vorragenden Abschnitten (16) versehen ist.

6. Anordnung nach Ansprüchen 4 und 5, **dadurch gekennzeichnet, dass** die längliche flache Struktur (11) der Anordnung (10) mindestens eine zweite Sektion (14, 15) umfasst, die mit mindestens einem vorragenden Abschnitt (17, 18, 19, 20) versehen ist.

7. Anordnung nach einem der vorhergehenden Ansprüche,
**dadurch gekennzeichnet, dass** die vorragenden Abschnitte (17, 18, 19, 20) jeweils aus einem Teil eines Rands der länglichen flachen Struktur (11) bestehen, der bezüglich der länglichen flachen Struktur (11) abgewinkelt ist.

8. Anordnung nach Ansprüchen 4 - 6, **dadurch gekennzeichnet, dass** die längliche flache Struktur (11) der Anordnung (10) die im Wesentlichen rechteckige erste Sektion (13) umfasst, die an gegenüberliegenden Seiten mit zwei im Wesentlichen rechteckigen zweiten Sektionen (14, 15) versehen ist.

9. Anordnung nach einem der vorhergehenden Ansprüche,
**dadurch gekennzeichnet, dass** das erste Karosseriestrukturelement (31) auch einen inneren verstärkten Träger (37) umfasst, um Kräfte von dem inneren verstärkten Träger (37) des ersten Karosseriestrukturelements (31) auf den inneren Träger (34) des zweiten Karosseriestrukturelements (30) zu verteilen, wenn der zur Verfügung stehende Zwischenraum abnimmt.

## Revendications

1. Dispositif (10) de répartition d'effort agencé de façon à répartir des efforts longitudinaux de collision dans un véhicule lors d'un accident, le véhicule comportant un premier élément (31) de structure de carrosserie comportant un montant avant ou un montant médian présentant une surface arrière, un deuxième élément (30) de structure de carrosserie comportant une portière munie d'un panneau (30) d'extrémité côté charnière qui jouxte ledit premier élément (31) de structure de carrosserie dans la position fermée de ladite portière et un espace intermédiaire (33) entre ladite surface arrière du premier élément (31) de structure de carrosserie et ledit panneau (30) de charnière de portière, la portière comportant au moins une poutre renforcée intérieure (34),
**caractérisé en ce que** le dispositif (10) est agencé de façon à être installé dans ledit espace intermédiaire (33), **en ce que** le dispositif (10) est pourvu d'au moins deux parties saillantes (17, 18, 19, 20) destinées à réduire localement l'espace intermédiaire (33), les parties saillantes (17, 18, 19, 20) s'étendant, ou saillant, sensiblement dans ou à contresens de la direction d'étendue longitudinale du véhicule et étant installées à proximité de ladite poutre intérieure (34) en vue d'interagir avec lesdits premier et deuxième éléments (30, 31) de structure de carrosserie tandis que l'espace intermédiaire (33) disponible diminue lors d'un accident, et de répartir dans cet état les efforts issus du premier élément (31) de structure de carrosserie à ladite poutre intérieure (34) du deuxième élément (30) de structure de carrosserie.

2. Dispositif selon la revendication 1,
**caractérisé en ce que** le dispositif (10) est agencé de façon à être monté sur le premier ou le deuxième élément (30, 31) de structure de carrosserie.

3. Dispositif selon l'une quelconque des revendications précédentes,
**caractérisé en ce que** les parties saillantes (17, 18, 19, 20) s'étendent, dans la position montée, dans ou à contresens d'une direction de déformation du véhicule lors d'un accident.

4. Dispositif selon l'une quelconque des revendications précédentes,
**caractérisé en ce que** le dispositif (10) comporte une structure plate allongée (11).

5. Dispositif selon la revendication 4,
**caractérisé en ce que** la structure plate allongée (11) du dispositif (10) comporte un premier tronçon (13) pourvu d'au moins deux parties saillantes (16) de forme sensiblement semi-cylindrique.

6. Dispositif selon les revendications 4 et 5,
**caractérisé en ce que** la structure plate allongée (11) du dispositif (10) comporte au moins un deuxième tronçon (14, 15) pourvu d'au moins une partie saillante (17, 18, 19, 20).

7. Dispositif selon l'une quelconque des revendications précédentes,
**caractérisé en ce que** chacune des parties saillantes (17, 18, 19, 20) est constituée d'une partie d'un bord de la structure plate allongée (11), inclinée par rapport à la structure plate allongée (11).

8. Dispositif selon les revendications 4 à 6,
**caractérisé en ce que** la structure plate allongée (11) du dispositif (10) comporte le premier tronçon (13) sensiblement rectangulaire pourvu de deux deuxièmes tronçons (14, 15) sensiblement rectangulaires sur des côtés opposés du premier tronçon (13) sensiblement rectangulaire.

9. Dispositif selon l'une quelconque des revendications précédentes,
**caractérisé en ce que** le premier élément (31) de structure de carrosserie comporte également une poutre renforcée intérieure (37) destinée à répartir les efforts issus de la poutre renforcée intérieure (37) du premier élément (31) de structure de carrosserie vers la poutre intérieure (34) du deuxième élément (30) de structure de carrosserie tandis que l'espace intermédiaire disponible diminue.
